# EUROPEAN PATENT APPLICATION

(11) **EP 2 978 173 A1**
(43) Date of publication of application: **27.01.2016**
(21) Application number: 14808281.1
(22) Date of filing: 22.04.2014
(51) Int. Cl.: H04L 12/70

(54) **PACKET CONTROLLING METHOD AND DEVICE**

(30) Priority: 07.06.2013 CN 201310224979
(71) Applicant: ZTE Corporation, Shenzhen, Guangdong 518057 (CN)
(72) Inventor: HE, Feng, Shenzhen Guangdong 518057 (CN); ZHU, Xuquan, Shenzhen Guangdong 518057 (CN); ZHANG, Yangchun, Shenzhen Guangdong 518057 (CN)
(74) Representative: De Bortoli, Tiziano
(86) International application number: PCT/CN2014/075885
(87) International publication number: WO 2014/194725

(57) **Abstract**

Disclosed is a packet controlling method and device, which relates to the field of GPON, and solves the problem that a packet controlling method cannot meet the needs of a practical operation. The method includes: an ONU or ONT receiving an OMCI message which carries a configuration rule and is sent by an OLT through a management entity, wherein the configuration rule includes modes for processing packets in different directions. The technical solution provided in embodiments of the present invention is suitable for the GPON packet processing and separately controls upstream and downstream packets.

## Description

### Technical Field

The present invention relates to the technical field of Gigabit Passive Optical Network (GPON), and more particularly, to a packet controlling method and device which control upstream and downstream packets separately for the OMCI (Optical network termination Management and Control Interface).

### Background of the Related Art

GPON is a broadband access technology using the point-to-multipoint network architecture, passive optical fiber transmission mode, frame encapsulation based on the GPON encapsulation method (referred to as GEM), and offering a variety of comprehensive services. The GPON consists of three parts: optical line terminal (referred to OLT), optical network unit (referred to as ONU) and optical distribute network (referred to as ODN).

The GPON standard G984.4/G988 binds operations on upstream and downstream packets together, and a downstream rule is generated based on the bound upstream rule. In some practical applications, upstream and downstream need to be separately controlled, for example, the ONU discards downstream packets indicating the Ethernet type/Tag Protocol Identifier (referred to as TPID)/virtual local area network (referred to as VLAN), as for the downstream VLAN aggregation function (N:1 VLAN), in the downstream, different traffic streams are processed with different priority treatments (filter priority or no filter priority), these are beyond the scope of the existing standard definition.

To sum up, the related packet controlling method cannot meet the needs of practical operations.

### Summary of the Invention

The present invention provides a packet controlling method and device to solve the problem that existing packet controlling methods cannot meet the needs of practical operations. A packets controlling method, comprises:
an OLT sending an OMCI message carrying a configuration rule via a management entity, wherein the configuration rule comprises modes for processing packets in different directions.

Preferably, said receiving an OMCI message which carries a configuration rule and is sent by an OLT via a management entity is:
an ONU or optical network terminal (ONT) receiving an OMCI message which carries the configuration rule and is sent by the OLT via the management entity.

Preferably, the management entity comprises an Extended VLAN tagging operation configuration data entity.

Preferably, the configuration rule comprises a filter condition portion and a treatment portion.

Preferably, the filter condition comprises a Direction parameter extended field, the parameter indicates a packet direction applicable to a packet processing rule, and the packet directions comprise: an upstream and downstream direction, an upstream direction and a downstream direction.

Preferably, after the step of receiving an OMCI message which carries a configuration rule and is sent by an OLT through a management entity, the method further comprises:
analyzing the configuration rule to obtain the filter condition portion and the treatment portion of the configuration rule;
configuring the configuration rule.

Preferably, the method further comprises:
receiving a packet, and searching for a filter condition matching with parameters of the packet;
when matching with an appropriate filter condition, selecting a treatment corresponding to the filter condition, and processing the packet.

Preferably, the parameters of the packet comprise a packet direction of the packet.

The present invention further provides a packet controlling device, comprising:
a configuration receiving module, configured to: receive an OMCI message which carries configuration rule and is sent by an OLT through a management entity, wherein the configuration rule comprises modes for processing packets in different directions.

Preferably, the device further comprises:
a rule analyzing module, configured to: analyze the configuration rule to obtain a filter condition portion and a treatment portion of the configuration rule;
a rule configuring module, configured to: configure the configuration rule.

Preferably, the device further comprises:
a packet receiving module, configured to: receive a packet, and search for a filter condition matching with parameters of the packet;
a packet processing module, configured to: when matching with an appropriate filter condition, select a treatment corresponding to the filter condition, and process the packet.

The embodiments of the present invention provide a packet controlling method and device, an ONU or ONT receives an OMCI message which carries configuration rule and is sent by an OLT through a management entity, wherein the configuration rule comprises a packet processing rule for packets in different directions, the ONU controls packets in different directions differently according to the configuration rule, to separately control upstream and downstream packets, and to solve the problem that the packet controlling method cannot meet the needs of practical operations.

### Brief Description of Drawings

FIG. 1 is a schematic diagram of the structure of a Received frame VLAN tagging operation table provided in an embodiment of the present invention;
FIG. 2 is a flow chart of a packet controlling method provided in the first embodiment of the present invention;
FIG. 3 is a flow chart of a packet controlling method provided in a second embodiment of the present invention;
FIG. 4 is a schematic diagram of the structure of a packet controlling device provided in a third embodiment of the present invention.

### Preferred Embodiments of the Invention

The GPON standard G984.4/G988 binds operations on upstream and downstream packets together, and a downstream rule is generated based on the bound upstream rule. In some practical applications, upstream and downstream need to be controlled separately, for example, the ONU discards the packets indicating the Ethernet type/Tag Protocol Identifier (referred to as TPID)/ virtual local area network (referred to as VLAN) in the downstream, as for the downstream VLAN aggregation function (N:1 VLAN), in the downstream, different traffic streams are processed with different priority treatments (filter priority or no filter priority), these are all beyond the scope of the existing standard definition.

In order to solve the abovementioned problem, the embodiment of the present invention provides a packet controlling method and device. Hereinafter in conjunction with the accompanying drawings, the embodiments of the present invention will be described in detail. It should be noted that, in the case of no conflict, embodiments and features in the embodiments of the present application may be arbitrarily combined with each other.

First, in conjunction with the accompanying drawings, the first embodiment of the present invention will be described.

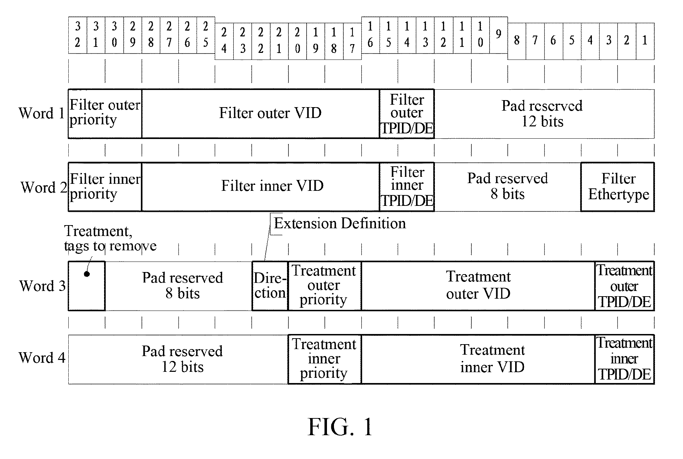

The embodiment of the present invention provides a packet controlling method to separately control packets in different directions. In the embodiments of the present invention, the attribute Received frame VLAN tagging operation table of the Extended VLAN tagging operation configuration data entity is extended, and the extended Received frame VLAN tagging operation table is shown in FIG. 1, wherein the extended field Direction is added, the size of Direction is 2 bits and it is used to indicate the application direction of the packet processing rule.

The embodiment of the present invention takes the Direction parameter having three values (0, 1, 2) as an example to illustrate, and the meaning represented by each value is as follows:
0 represents processing in accordance with the G984.4/G988 specification;
1 represents upstream, indicating that the packet processing rule is suitable for packets in the upstream direction;
2 represents downstream, indicating that the packet processing rule is suitable for packets in the downstream direction.

Other values: Reserved
the attribute Downstream mode is valid when the Direction value is 0, and is not valid when the Direction is any other value.

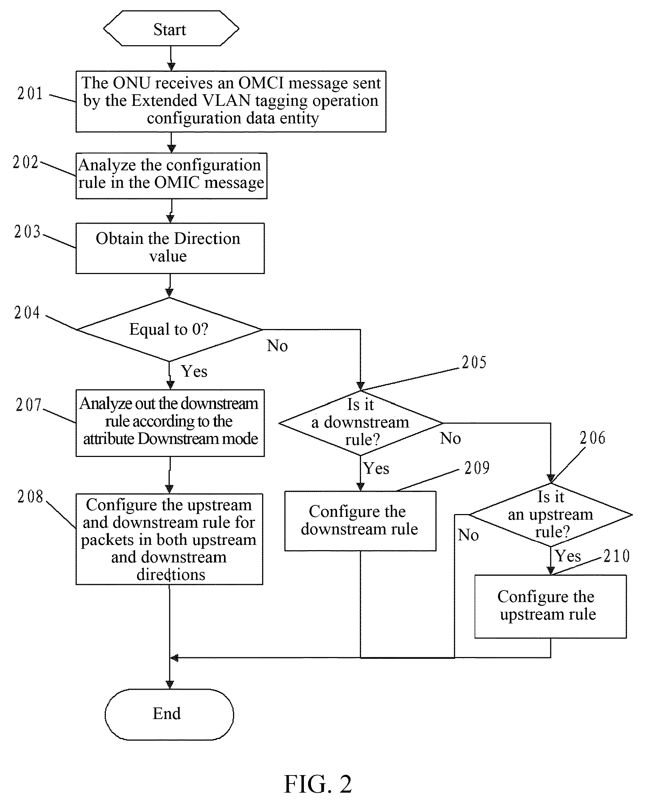

The process of using the packet controlling method provided in the embodiment of the present invention to separately control upstream and downstream packets is shown in FIG. 2, comprising:
in step 201: the ONU receives an OMCI message carrying a configuration rule and sent by an Extended VLAN tagging operation configuration data entity.

The embodiment of the present invention takes the Extended VLAN tagging operation configuration data entity as a management entity.

In step 202: it is to analyze the filter condition portion (including filter conditions such as VLAN/TPID/Ethernet type information, etc.) as well as the treatment portion (such as treatments such as discarding, transparently transmitting and modifying packets) of the configuration rule.

In step 203: it is to analyze the value of the extended field Direction.

In step 204 to step 206: it is to judge the Direction value (equal to 0/1 (upstream)/2 (downstream)).

In step 207: it is to analyze out filter conditions and treatments (downstream rule) for downstream packets according to the attribute Downstream mode.

In step 208: it is to configure the analyzed upstream and downstream rule (that the filter condition is that the packet direction is upstream and downstream) for packets in both upstream and downstream directions.

In step 209: it is to configure downstream rule (that is, the filter condition is that the packet direction is downstream) for packets in the downstream direction.

In step 210: it is to configure an upstream rule (that is, the filter condition is that the packet direction is upstream) for packets in the upstream direction.

By now, the configuration process ends. Then, packets in different directions can be processed differently according to the configuration rule.

The following is three examples of processing packets in different directions respectively based on the same port of the ONU:

Example 1: transparent transmission of upstream VLAN100 packets, downstream VLAN200 and VLAN300 packets are converted into VLAN 100 packets.

Table 1 is the configuration rule table:

| | Filter | | | | | Treatment | | | | | |
|---|---|---|---|---|---|---|---|---|---|---|---|
| | Outer | | Inner | | | Tags to remove | Direction | Outer | | Inner | |
| | Priority | ID | Priority | ID | EtherType | | | Priority | ID | Priority | ID |
| Transparent Transmission of Upstream VLAN 100 | 15 | 4096 | 8 | 100 | 0 | 0 | 1 | 15 | N/A | 15 | N/A |
| Downstream VLAN200 is converted to VLAN100 | 15 | 4096 | 8 | 200 | 0 | 1 | 2 | 15 | N/A | 0 | 100 |
| Downstream VLAN300 is converted to VLAN100 | 15 | 4096 | 8 | 300 | 0 | 1 | 2 | 15 | N/A | 0 | 100 |

Example 2: the treatment aiming at packets in the upstream direction is adding a layer VLAN100 to the upstream UNTAG packets, the VLAN 200 packets are converted into the VLAN500 (the priority is 1), and the VLAN300 packets are converted into the VLAN 500 (the priority is 2),
the treatment aiming at downstream packets is removing a layer of tag from the downstream VLAN100 (any priority) packets, the VLAN500 (the priority is 1) packets are converted into the VLAN200, the VLAN 500 (the priority is 2) packets are converted into the VLAN300.

The configuration rule table based on the above rule is shown in Table 2:

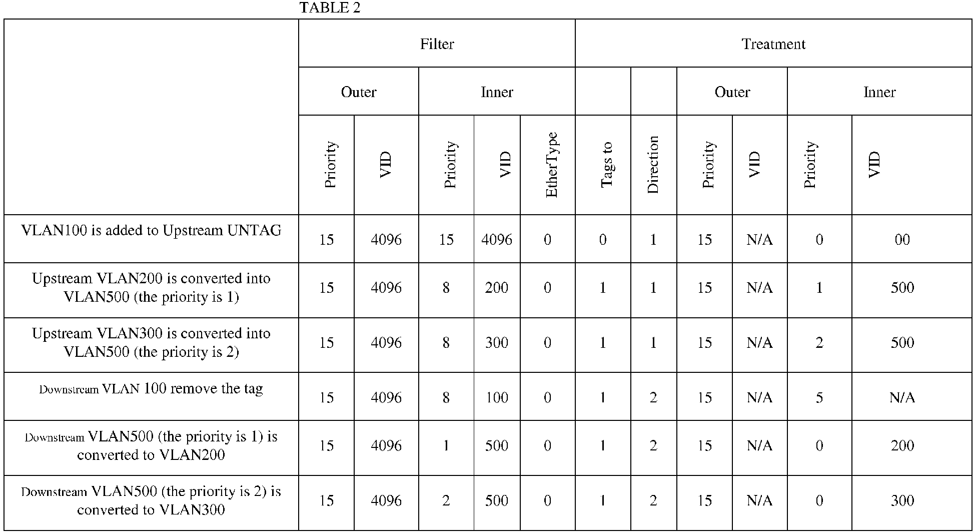

Example 3: the treatment aiming at the upstream packets is to discard the VLAN100 packets, and the treatment aiming at packets in the downstream direction is to discard the VLAN100 packets.

The configuration rule table based on the above rule is shown in Table 3:

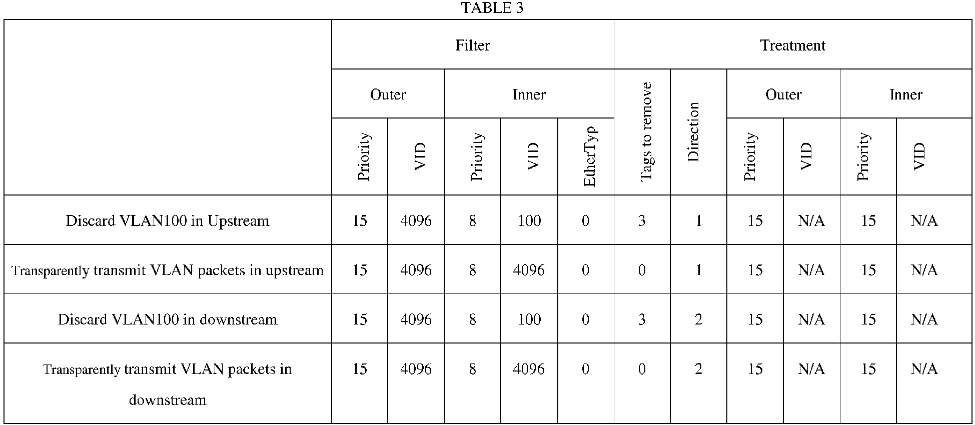

In the embodiment of the present invention, the ONT may also receive the OMCI message carrying the configuration rule and sent by the Extended VLAN tagging operation configuration data entity, configure the configuration rule, and perform the appropriate treatment on packets. Its implementation principle is the same as the implementation principle when the ONU works as the main body, which will not be repeated herein.

In the following, in conjunction with the accompanying drawings, the second embodiment of the present invention will be described.

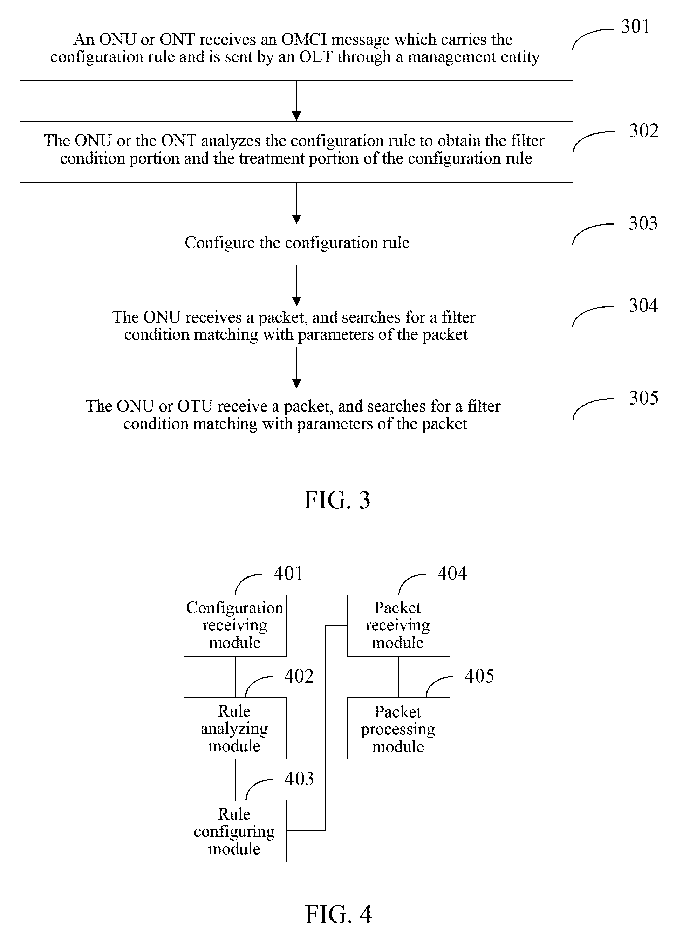

The embodiment of the present invention provides a packet controlling method to separately control packets in different directions. The process of using the packet controlling method provided in the embodiment of the present invention to separately control packets in different directions is shown in FIG. 3, comprising:
in step 301, an ONU or ONT receives an OMCI message which carries the configuration rule and is sent by an OLT through a management entity;

In the embodiment of the present invention, the configuration rule comprises modes for processing packets in different directions, and the management entity comprises an Extended VLAN tagging operation configuration data entity.

The configuration rule comprises a filter condition portion and a treatment portion, the filter condition portion comprises at least one filter condition, and each filter condition corresponds to a treatment in the treatment portion. The filter condition and the treatment corresponding to this filter condition may also be seen as one sub-rule of the configuration rule, and the configuration rule can comprise multiple sub-rules.

The filter condition comprises a parameter expansion field: Direction, and the parameter indicates packet directions applicable to the packet processing rule, and the packet directions comprise: an upstream and downstream direction, an upstream direction and a downstream direction.

In step 302, the ONU or the ONT analyzes the configuration rule to obtain the filter condition portion and the treatment portion of the configuration rule;
in step 303, it is to configure the configuration rule.

After completing the configuration, the packets can be processed.

In step 304, the ONU or OTU receive a packet, and searches for a filter condition matching with parameters of the packet;
the parameters of the packet comprise packet direction of the packet, and in this step, it is to judge whether the packet direction matches with the content of the Direction parameter extended field of the filter condition.

In step 305, when matching with an appropriate filter condition, it is to select a treatment corresponding to the filter condition, and process the packet.

In the following, in conjunction with the accompanying drawings, the third embodiment of the present invention will be described.

The embodiment of the present invention provides a packet controlling device, whose structure is shown in FIG. 4, comprising:
a configuration receiving module 401, used for an OMCI message which carries a configuration rule and is sent by an OLT through a management entity, wherein the configuration rule comprises modes for processing packets in different directions.

Preferably, the device further comprises:
a rule analyzing module 402, used to: analyze the configuration rule to obtain a filter condition portion and a treatment portion of the configuration rule;
a rule configuring module 403, used to: configure the configuration rule.

Preferably, the device further comprises:
a packet receiving module 404, used to: receive a packet, and search for a filter condition matching with parameter of the packet;
a packet processing module 405, used to: when matching with an appropriate filter condition, select a treatment corresponding to the filter condition, and process the packet.

The abovementioned packet controlling device can be integrated in the ONU or the ONT, and the Extended VLAN tagging operation configuration data entity works as a management entity and completes the corresponding function.

It should be noted that, in the technical solution of the embodiment of the present invention, a specific implementation may extensively define the undefined portion in the attribute Received frame VLAN tagging operation table of the Extended VLAN tagging operation configuration data entity, but it is not limited to this, extensions through other modes are also within the scope of the present invention.

Those of ordinary skill in the art can understand that that all or some of the steps of the abovementioned embodiments may be implemented with a computer program procedure, the computer program may be stored in a computer-readable storage medium, and the computer program is implemented on an appropriate hardware platform (such as system, device, equipment, device, etc.), and in the implementation, it comprises one of the steps of the method embodiment or a combination thereof.

Alternatively, all or some of the steps of the abovementioned embodiments can also be implemented with integrated circuits, these steps may be made into individual integrated circuit modules respectively, or a plurality of modules or steps therein are made into a single integrated circuit module to implement. Thus, the present invention is not limited to any specific hardware and software combination.

Each device/functional module/functional unit in the abovementioned embodiments can be implemented with universal computing devices, they can be concentrated on a single computing device, or can be distributed over a network composed of a plurality of computing devices.

When each device/functional module/functional unit in the abovementioned embodiments is implemented as software modules and work as standalone products to be sold or used, they can be stored in a computer readable storage medium. The abovementioned computer-readable storage medium may be a read-only memory, a magnetic or optical disk, and the like.

Those skilled in the art can easily conceive changes or replacements within the technical scope disclosed in the present invention, and these changes and replacements shall fall within the protection scope of the present invention. Accordingly, the protection scope of the present invention should be subjected to the protection scope of the claims.

### Industrial Applicability

The embodiment of the present invention provides a packet controlling method and device, a ONU receives an OMCI message which carries a configuration rule and is sent by a management entity, wherein the configuration rule comprises a packet processing rule for packets in different directions, the ONU controls packets in different directions differently according to the configuration rule, to separately control upstream and downstream packets, and to solve the problem that the existing packet controlling method cannot meet the needs of practical operations.

## Claims

1. A packets controlling method, comprising:
receiving an optical network termination management and control interface (OMCI) message which carries a configuration rule and is sent by an optical line terminal (OLT) via a management entity, wherein the configuration rule comprises modes for processing packets in different directions.

2. The packet controlling method of claim 1, wherein, said receiving an OMCI message which carries a configuration rule and is sent by an OLT via a management entity is:
an optical network unit (ONU) or optical network terminal (ONT) receiving an OMCI message which carries the configuration rule and is sent by the OLT via the management entity.

3. The packet controlling method of claim 1, wherein, the management entity comprises an Extended virtual local area network (VLAN) tagging operation configuration data entity.

4. The packet controlling method of claim 1, wherein, the configuration rule comprises a filter condition portion and a treatment portion.

5. The packet controlling method of claim 4, wherein, the filter condition comprises a Direction parameter extended field, the parameter indicates a packet direction applicable to a packet processing rule, and the packet directions comprise: an upstream and downstream direction, an upstream direction and a downstream direction.

6. The packet controlling method of claim 4 or 5, wherein, after the step of receiving an OMCI message which carries a configuration rule and is sent by an OLT through a management entity, the method further comprises:
analyzing the configuration rule to obtain the filter condition portion and the treatment portion of the configuration rule;
configuring the configuration rule.

7. The packet controlling method of claim 6, wherein, the method further comprises:
receiving a packet, and searching for a filter condition matching with parameters of the packet;
when matching with an appropriate filter condition, selecting a treatment corresponding to the filter condition, and processing the packet.

8. The packet controlling method of claim 7, wherein, the parameters of the packet comprise a packet direction of the packet.

9. A packet controlling device, comprising:
a configuration receiving module, configured to: receive an OMCI message which carries configuration rule and is sent by an OLT through a management entity, wherein the configuration rule comprises modes for processing packets in different directions.

10. The packet controlling device of claim 9, wherein, the device further comprises:
a rule analyzing module, configured to: analyze the configuration rule to obtain a filter condition portion and a treatment portion of the configuration rule;
a rule configuring module, configured to: configure the configuration rule.

11. The packet controlling device of claim 10, wherein, the device further comprises:
a packet receiving module, configured to: receive a packet, and search for a filter condition matching with parameters of the packet;
a packet processing module, configured to: when matching with an appropriate filter condition, select a treatment corresponding to the filter condition, and process the packet.
